# EUROPEAN PATENT APPLICATION

(11) **EP 4 096 332 A1**
(43) Date of publication of application: **30.11.2022**
(21) Application number: 20915551.4
(22) Date of filing: 21.01.2020
(51) Int. Cl.: H04W 72/12, H04W 52/08, H04W 52/48

(54) **TERMINAL AND TRANSMISSION POWER CONTROL METHOD**

(71) Applicant: NTT DOCOMO, INC., Chiyoda-Ku Tokyo 100-6150 (JP)
(72) Inventor: KUMAGAI, Shinya, Tokyo 100-6150 (JP); NAGATA, Satoshi, Tokyo 100-6150 (JP); WANG, Lihui, Beijing, 100190 (CN); HOU, Xiaolin, Beijing, 100190 (CN)
(74) Representative: Hoffmann Eitle
(86) International application number: PCT/JP2020/001989
(87) International publication number: WO 2021/149163

(57) **Abstract**

A terminal including: a reception unit configured to receive feedback information for uplink transmission based on a configured grant from a base station apparatus; a control unit configured to determine an application target of a transmission power control command included in the feedback information; and a transmission unit configured to apply the transmission power control command to uplink transmission of the application target.

## Description

### [Technical Field]

The present invention relates to a terminal in a wireless communication system.

### [Background Art]

In NR (New Radio), a successor system to the Long Term Evolution (LTE) (also referred to as "5G"), technologies that satisfy requirements such as high capacity systems, high data transmission rate, low delay, simultaneous connection of multiple terminals, low cost, and power saving are being considered.

In addition, existing LTE systems support use of frequency bands (i.e., unlicensed bands, unlicensed carriers, and unlicensed CC) different from frequency bands licensed to telecom carriers (operators) in order to expand frequency bands. Examples of unlicensed bands include 2.4-GHz band, 5-GHz band, and 6-GHz band where Wi-Fi (registered trademark) or Bluetooth (registered trademark) can be used.

Specifically, Rel.13 supports Carrier Aggregation (CA), which integrates a carrier (CC) of a licensed band and a carrier (CC) of an unlicensed band. Communication using an unlicensed band with a license band is called License-Assisted Access (LAA) .

In a wireless communication system that performs communication using an unlicensed band with a licensed band, a base station apparatus (downlink) and a user terminal (uplink) perform channel sensing (carrier sensing) to check presence or absence of transmission by other devices (e.g., base station apparatus, user terminal, Wi-Fi device, etc.) prior to transmitting data in the unlicensed band. As result of the sensing, if it is confirmed that there is no transmission of other devices, the base station apparatus or the user terminal acquires a transmission opportunity, and can perform transmission. This operation is called LBT (Listen Before Talk) . Also, in NR, the system that supports the unlicensed band is called NR-U system.

### [Prior art documents]

### [Non-patent document]

[Non-Patent Document 1] 3GPP TS 38. 212 V16. 0. 0(2019-12)
[Non-Patent Document 2] 3GPP TS 38. 331 V15. 8. 0(2019-12)
[Non-Patent Document 3] 3GPP TS 38. 213 V15. 8. 0(2019-12)

### [Summary of Invention]

### [Problem to be solved by the invention]

Data transmission by PUSCH based on CG (Configured Grant) is supported for NR-U uplink transmission. Hereinafter, CG-based PUSCH may be referred to as CG-PUSCH. A user terminal that has been configured with CG by the base station apparatus can transmit data by PUSCH without dynamically receiving UL grant.

In CG-PUSCH, the base station apparatus can transmit feedback information (CG-DFI (Downlink Feedback Information)) to the user terminal (Non-Patent Document 1). As described in Non-Patent Document 1, CG-DFI includes a TPC (Transmission Power Control) command. However, it is unclear what the TPC command included in the CG-DFI apply to. Therefore, the TPC command included in CG-DFI may not be properly applied. Note that, such a problem may also arise in feedback information other than CG-DFI of NR-U.

The present invention has been made in view of the above-described points, and an object of the present invention is to provide a technique, in a wireless communication system, that can properly apply a transmission power control command included in feedback information transmitted from the base station apparatus to the user terminal.

### [Means for Solving Problems]

According to the disclosure technique, there is provided a terminal including: a reception unit configured to receive feedback information for uplink transmission based on a configured grant from a base station apparatus; a control unit configured to determine an application target of a transmission power control command included in the feedback information; and a transmission unit configured to apply the transmission power control command to uplink transmission of the application target.

### [Effects of the Invention]

According to the disclosed technique, there is provided a technique, in a wireless communication system, that can properly apply a transmission power control command included in feedback information transmitted from the base station apparatus to the user terminal.

### [Brief Description of Drawings]

Fig. 1 is a diagram for explaining a wireless communication system according to an embodiment of the present invention;
Fig. 2 is a diagram for explaining a wireless communication system according to an embodiment of the present invention;
Fig. 3 is a sequence diagram illustrating a basic operation according to an embodiment of the present invention;
Fig. 4 is a diagram for explaining Example 1-1;
Fig. 5 is a diagram for explaining Example 1-2;
Fig. 6 is a diagram for explaining Example 1-3;
Fig. 7 is a diagram for explaining Example 1;
Fig. 8 is a diagram for explaining Example 2-4;
Fig. 9 is a diagram for explaining Example 2-5;
Fig. 10 is a diagram for explaining Example 2-6;
Fig. 11 is a diagram for explaining Examples 3-1 and 3-2;
Fig. 12 is a diagram for explaining Example 3-3;
Fig. 13 is a diagram showing an example of a functional configuration of a base station apparatus 10 according to an embodiment of the present invention;
Fig. 14 is a diagram showing an example of a functional configuration of a user terminal 20 according to an embodiment of the present invention;
Fig. 15 is a diagram illustrating an example of a hardware configuration of the base station apparatus 10 or the user terminal 20 according to an embodiment of the present invention.

### [Mode for Carrying Out the Invention]

Hereinafter, embodiments of the present invention will be described with reference to the drawings. The embodiments described below are examples, and the embodiments to which the present invention is applied are not limited to the following embodiments.

In operating a wireless communication system according to an embodiment of the present invention, existing techniques are used as appropriate. The existing technology is, for example, an existing NR. The present invention is applicable not only to NR but also to any wireless communication system.

In embodiments of the present invention, the duplex method may be a TDD (Time Division Duplex) method, a FDD (Frequency Division Duplex) method, or any other method (e.g., Flexible Duplex, etc.).

In an embodiment of the present invention, "wireless parameter or the like being configured" may mean that a predetermined value is preconfigured or that a wireless parameter notified from the base station apparatus 10 or the user terminal 20 is configured. However, the "configured" of the configured grant corresponds to that a radio parameter notified from the base station apparatus 10 is configured to the user terminal 20.

### (System Configuration)

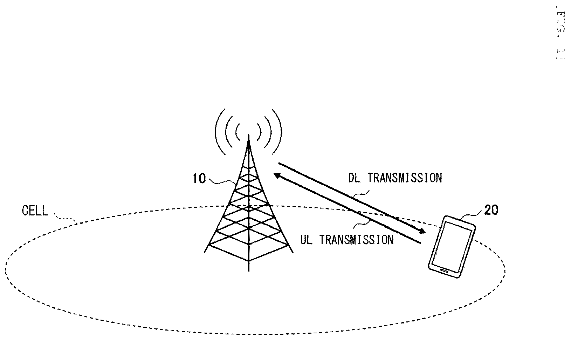

Fig. 1 is a diagram illustrating a wireless communication system according to an embodiment of the present invention. The wireless communication system in an embodiment of the present invention includes a base station apparatus 10 and a user terminal 20, as shown in FIG. 1. In FIG. 1, one base station apparatus 10 and one user terminal 20 are shown, but this is an example and may be more than one each. The user terminal 20 may be referred to as a "terminal." The wireless communication system according to this embodiment may be referred to as an NR-U system. Thus, in embodiments of the present invention, NR-U is assumed, but the technology described in embodiments of the present invention is applicable to wireless communication systems other than NR-U.

The base station apparatus 10 is a communication apparatus that provides one or more cells and performs wireless communication with the user terminal 20. Physical resources of a radio signal are defined in a time domain and a frequency domain, the time domain may be defined in slots or OFDM symbols, and the frequency domain may be defined in subbands, subcarriers or resource blocks.

As shown in FIG. 1, the base station apparatus 10 transmits control information or data in DL (Downlink) to the user terminal 20 and receives control information or data in UL (Uplink) from the user terminal 20. Both the base station apparatus 10 and the user terminal 20 are capable of beam forming to transmit and receive signals. Also, both the base station apparatus 10 and the user terminal 20 can apply communication by MIMO (Multiple Input Multiple Output) to DL or UL. The base station apparatus 10 and the user terminal 20 may both communicate via a SCell (Secondary Cell) and a PCell (Primary Cell) by a CA (Carrier Aggregation).

The user terminal 20 is a communication device, having a wireless communication function, such as a smartphone, a cellular phone, a tablet, a wearable terminal, a communication module for M2M (Machine-to-Machine), or the like. As shown in Fig. 1, the user terminal 20 utilizes various communication services provided by the wireless communication system by receiving control information or data in DL from the base station apparatus 10 and transmitting control information or data in UL to the base station apparatus 10.

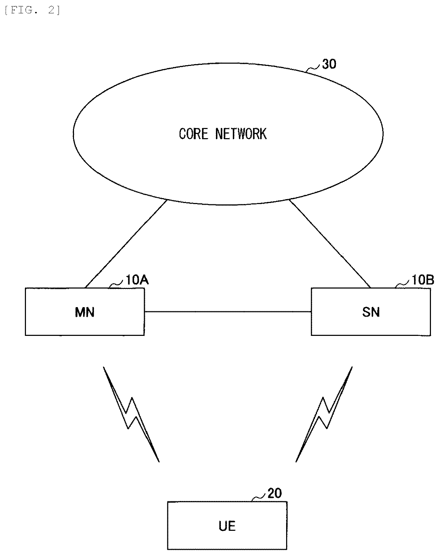

Fig. 2 shows an example of a configuration of a wireless communication system when NR-DC (NR-Dual connectivity) is executed. As shown in FIG. 2, a base station apparatus 10A serving as an MN (Master Node) and a base station apparatus 10B serving as an SN (Secondary Node) are provided. The base station apparatus 10A and the base station apparatus 10B are each connected to a core network. The user terminal 20 communicates with both the base station apparatus 10A and the base station apparatus 10B.

The cell group provided by the base station apparatus 10A that is an MN is called MCG (Master Cell Group), and the cell group provided by the base station apparatus 10B that is an SN is called SCG (Secondary Cell Group) . The operation according to this embodiment may be performed in any one configuration of Figs. 1 and 2, or may be performed in a configuration other than that shown in Figs. 1 and 2.

In the wireless communication system according to the present embodiment, LBT described above is executed. The base station apparatus 10 or the user terminal 20 acquires a CO when the LBT result is idle, and performs transmission, but does not perform transmission when the LBT result is busy (LBT-busy). However, operations described below may be applied to systems other than NR-U (systems without LBT).

### (Example of operation, tasks)

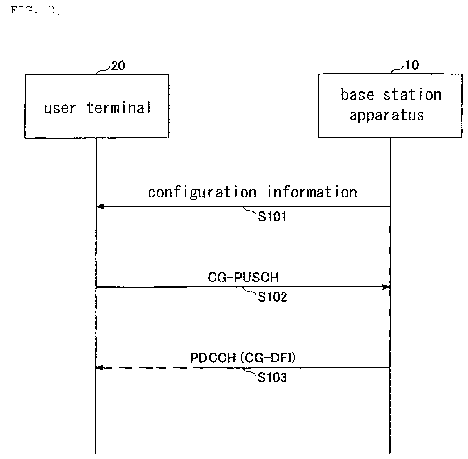

Fig. 3 shows an example of operation of the wireless communication system according to the present embodiment. This is an example of an operation involving Configured Grant. Note that in Configured Grant, a PUSCH resource is assigned to a user terminal individually beforehand, and when UL data occurs, the user terminal transmits data using the PUSCH resource without performing SR (scheduling request) transmission. On the other hand, the method of transmitting with a PUSCH resource dynamically allocated by a DCI (UL grant) transmitted from the base station apparatus 20 may be referred to as a dynamic grant.

The "Configured Grant" may be a parameter indicating a PUSCH resource configured from the base station apparatus 20 to the user terminal 10. For example, "the user terminal 20 has a Configured Grant" may mean that "the user terminal 20 holds a parameter representing a PUSCH resource configured beforehand from the base station apparatus 20 in a storage unit."

In S101 of Fig. 3, the user terminal 20 receives configuration information from the base station apparatus 10. This configuration information is, for example, ConfiguredGrantConfig (Non-Patent Document 2) by RRC. In Type 1 of Configured Grant, ConfiguredGranConfig contains a parameter (rc-ConfiguredUplinkGrant) indicating a PUSCH resource. The user terminal 20 may use this PUSCH resource to transmit UL data thereafter without receiving UL grant. Fig. 3 assumes Type 1.

In Type 2 of Configured Grant, the parameter (rc-ConfiguredUplinkGrant) indicating a PUSCH resource is not included in ConfiguredGrant, and a DCI to be received thereafter designates a resource specification and Activation/Deactivation of Configured Grant.

In S102, the user terminal 20 performs uplink data transmission by a CG-PUSCH. In S103, the user terminal 20 receives a CG-DFI (feedback information to the CG-PUSCH) transmitted from the base station apparatus 10. The CG-DFI is transmitted, for example, by DCI format 0_1.

The CG-DFI according to this embodiment includes, for example, information listed below (Non-Patent Document 1).
- Identifier for DCI formats - 1 bit
- DFI flag - 0 or 1 bit

If DCI format 0_1 indicates CG-DFI, the remaining fields contain the following information.
- HARQ-ACK bitmap - [16] bits
- TPC command for scheduled PUSCH-2 bits as defined in Clause 7.1.1 of [5, TS38.213 (Non-Patent Document 3)]

The TPC command described above is a command that instructs the user terminal 20 to increase or decrease transmission power of PUSCH based on a received power of a PUSCH signal received from the user terminal 20 in closed loop power control. The user terminal 20 determines transmission power when transmitting a PUSCH by, for example, an equation of P_{PUSCHb,f,c}(i,j,q_{d},l) disclosed in 7.7.1 of Non-Patent Document 1.

The TPC command is used by the user terminal 20 to calculate a value of f_{b,f,c}(i,l), which is one of parameters used to determine a transmission power of PUSCH. In f_{b,f,c}(i,l), b represents UL BWP, f represents a carrier, c represents a serving cell, and i represents a PUSCH transmission opportunity. l(L) is PUSCH power control adjustment state.

In this embodiment, the user terminal 20 can perform power control of a plurality of closed loops (hereinafter simply referred to as a loop) in PUSCH transmission, and l indicates which loop the power control is being performed for. For example, when twoPUSCH-PC-AdjustmentStates, which indicates that power control is performed with a maximum of two loops, is configured from the base station apparatus 10 to the user terminal 20, l is 0 or 1, and when it is not configured, l is 0.

The TPC command itself, for example, has a value of 0 to 3. If the value of the TPC command is interpreted as an absolute value, then the value of the TPC command (corresponding to each of 0-3 (e.g.,-4,-1, 1, 4)) becomes the value of f_{b,f,c}(i,l). When the value of the TPC command is interpreted as a cumulative value (cumulative value), a value obtained by adding a value of the TPC command (e.g.,-1, 0, 1, 3) to f_{b,f,c}(i-i₀,l) which is a value of f before i becomes the value of f_{b,f,c}(i,l). Whether the value of the TPC command is interpreted as an absolute value or as a cumulative value can be specified, for example, by tpc-Accumulation notified to the user terminal 20 from the base station apparatus 10. Note that the "value of the TPC command" is a value (dB) corresponding to a value of a TPC command field.

However, in the existing art disclosed in Non-Patent Document 1, the TPC command (the TPC command for scheduled PUSCH) included in the CG-DFI is unclear as described below.

It is unclear whether the TPC command is applied to dynamic PUSCH (PUSCH scheduled for dynamic grant) or to CG-PUSCH. Also, when multiple configured grants (which may be referred to as "CG" or "CG Configuration") are active in a given BWP, it is unclear which configured grant the TPC command is applied to.

It is also unclear which loop (i.e., which value of l) the TPC command is applied to when twoPUSCH-PC-AdjustmentStates is configured in the user terminal 20. Furthermore, it is unclear whether the TPC command value is an absolute value or a cumulative value.

Hereinafter, Examples 1 to 4 will be described as detailed operation examples for solving the above-described problems. Example 1, Example 2, Example 3, and Example 4 may be implemented (executed) in any combination unless there is a conflict. For example, any of Example 1 + Example 2, Example 1 + Example 2 + Example 3, ad Example 1 + Example 2 + Example 3 + Example 4 can be implemented.

### (Example 1)

Example 1 is an example of clarifying an application target of a TPC command included in a CG-DFI. Examples 1-1 to 1-6 will be described below.

### <Example 1-1>

In Example 1-1, the user terminal 20 applies a TPC command (TPC command for scheduled PUSCH) in a CG-DFI only to a scheduled PUSCH. Here, Scheduled PUSCH is a PUSCH that is scheduled from the base station apparatus 10 to the user terminal 20 in a dynamic UL grant.

More specifically, the scheduled PUSCH in Example 1-1 is a PUSCH that is associated with an UL grant scheduling PUSCH transmission and that is scheduled with an UL grant having a CRC scrambled with C-RNTI, CS-RNTI, MCS-C-RNTI, or SP-CSI-RNTI.

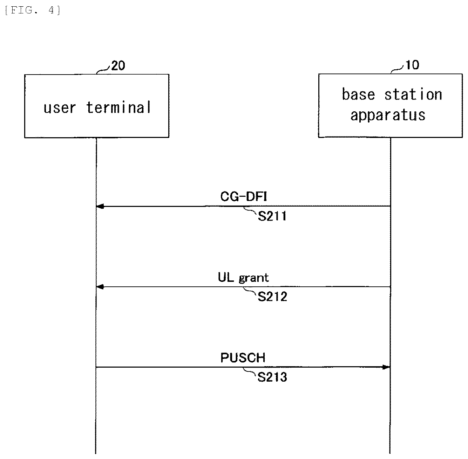

An operation example of Example 1-1 will be described with reference to Fig. 4. In S211, the user terminal 20 receives a CG-DFI from the base station apparatus 10. In S212, the user terminal 20 receives an UL grant for scheduling the above-described PUSCH from the base station apparatus 10.

In S213, the user terminal 20 transmits data using a PUSCH resource scheduled in S212. The user terminal 20 applies a TPC command included in the CG-DFI received at S211 to determine a transmission power of PUSCH transmission at S213.

### <Examples 1-2>

In Example 1-2, the user terminal 20 applies a TPC command (TPC command for scheduled PUSCH) in a CG-DFI only to retransmission (scheduled re-transmission PUSCH) for a scheduled PUSCH in which the value of HARQ-ACK in a HARQ-ACK bitmap of the CG-DFI is NACK. A scheduled PUSCH is a PUSCH scheduled by an UL grant as described in Example 1-1.

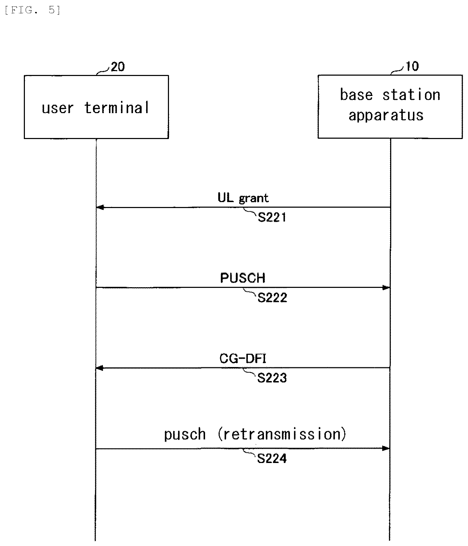

An operation example of Example 1-2 will be described with reference to Fig. 5. In S221, the user terminal 20 receives an UL grant from the base station apparatus 10. In S222, the user terminal 20 transmits data with a PUSCH resource scheduled with the UL grant of S221.

In S223, the user terminal 20 receives a CG-DFI from the base station apparatus 10. This CG-DFI contains a HARQ-ACK bitmap in which a HARQ-ACK bit for PUSCH transmission in S222 is NACK.

When the user terminal 20 detects that the bit of the HARQ-ACK for the PUSCH transmission in S222 is NACK, the user terminal 20 performs PUSCH retransmission for the PUSCH transmission in S222 in S224. In S224, the user terminal 20 applies a TPC command included in the CG-DFI received at S223 to determine a transmission power of the PUSCH transmission (retransmission) at S224.

### <Examples 1-3>

In Example 1-3, the user terminal 20 applies a TPC command (TPC command for scheduled PUSCH) in a CG-DFI only to CG-PUSCH. The TPC command is applied for both Type 1 and Type 2 CG-PUSCH. However, for Type 2, a first PUSCH transmission of Type 2 transmitted by an UL grant activation (i.e., UL grant, of NDI=0, scrambled with CS-RNTI) is excluded for application.

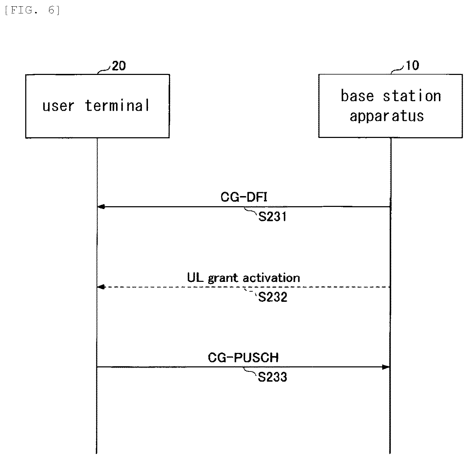

An operation example of Example 1-3 will be described with reference to Fig. 6. First, a case in which S232 is not present will be explained. In S231, the user terminal 20 receives a CG-DFI from the base station apparatus 10. In S233, the user terminal 20 transmits data using a CG-PUSCH resource (i.e., Type 1) which is configured by RRC beforehand. In S233, the user terminal 20 applies a TPC command included in the CG-DFI received at S231 to determine a transmission power of the CG-PUSCH transmission.

Next, a case where S232 is present (that is, a case of Type 2) will be described. In S231, the user terminal 20 receives a CG-DFI from the base station apparatus 10. In S232, the user terminal 20 receives an UL grant activation. In S233, the user terminal 20 transmits data using the CG-PUSCH resource designated by S232. In S233, the user terminal 20 does not apply the TPC command included in the CG-DFI received by S231. As another example, however, the TPC command of the CG-DFI may also be applied to CG-PUSCH transmitted by the UL grant activation.

### <Example 1-4>

Example 1-4 is a combination of Examples 1-1 and 1-3. That is, in Example 1-4, the user terminal 20 applies a TPC command (TPC command for scheduled PUSCH) in a CG-DFI to both a dynamic PUSCH (PUSCH described in Example 1-1) and a CG-PUSCH (CG-PUSCH described in Example 1-3).

### <Example 1-5>

In Example 1-5, the user terminal 20 transmits data by a PUSCH scheduled by an UL grant or a CG-PUSCH, as an initial transmission.

Assuming that the data by the above-described PUSCH transmission was not normally received by the base station apparatus 10. The user terminal 20 receives from the base station apparatus 10 a CG-DFI including a NACK indicating that the PUSCH transmission has failed, and receives from the base station apparatus 10 an UL grant for scheduling retransmission of the failed PUSCH transmission.

The user terminal 20 performs power control by applying the TPC command included in the CG-DFI including the above-described NACK to the retransmission of the PUSCH transmission.

### <Example 1-6>

In Example 1-6, the user terminal 20 applies a TPC command (TPC command for scheduled PUSCH) in the CG-DFI only to a CG-PUSCH. At this time, the CG-PUSCH to which the TPC command in the CG-DFI is applied is limited to one corresponding to PUSCH in which the HARQ-ACK bit in the CG-DFI is NACK. This CG-PUSCH is applied to both Type 1 and Type 2.

An operation example of Example 1-6 will be described with reference to Fig. 6. A case where S232 is absent is described. In S231, the user terminal 20 receives a CG-DFI from the base station apparatus 10. The CG-DFI received on S231 contains a HARQ-ACK bitmap, in which a HARQ-ACK bit for a PUSCH transmission is NACK. In S233, the user terminal 20 transmits a PUSCH in which the HARQ-ACK bit of the CG-DFI received by S231 is NACK with a CG-PUSCH resource (i.e., Type 1) configured by RRC beforehand. In S233, the user terminal 20 applies a TPC command included in the CG-DFI received at S231 to determine a transmission power of the CG-PUSCH transmission.

### <Summary of Example 1>

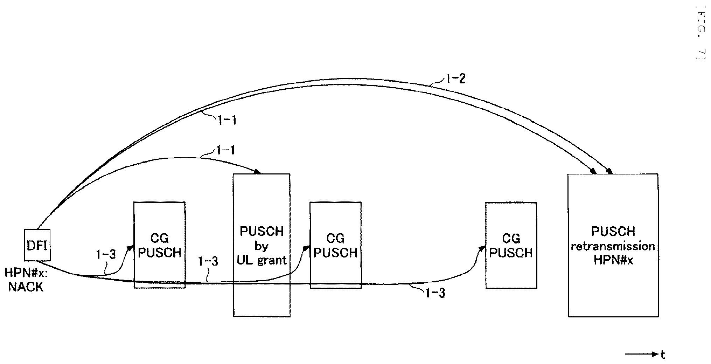

Fig.7 shows a summary of Example 1. As shown in Fig. 7, in Example 1-1, a TPC command of a CG-DFI is applied to a PUSCH (transmission and retransmission) by an UL grant. In Example 1-2, a TPC command of a CG-DFI is applied to retransmission of a PUSCH for which NACK is notified by the CG-DFI. In Example 1-3, a TPC command of a CG-DFI is applied to a CG-PUSCH.

According to the Example 1 described above, the user terminal 20 can clearly determine PUSCH transmission of an application target of a TPC command included in a CG-DFI.

### (Example 2)

Example 2 is an example related to Example 1-3, and is an example describing which CG an TPC command in a CG-DFI is applied to in a case where a plurality of CGs (multiple CG configurations) are configured to the user terminal 20 in a BWP (given BWP) of a serving cell. Examples 2-1 to 2-6 will be described below.

### <Example 2-1>

In Example 2-1, the user terminal 20 applies a TPC command in a CG-DFI to all active CG configurations. Active CG configuration is all Type 1 CG configurations and Type 2 CG configuration for which an activation instruction is received by DCI.

For example, when the user terminal 20 is configured with CG1, CG2, and CG3 as active CG configurations, the user terminal 20 applies a TPC command in a CG-DFI to any of PUSCH transmission by CG1, PUSCH transmission by CG2, and PUSCH transmission by CG3.

### <Example 2-2>

In Example 2-2, the user terminal 20 applies a TPC command in a CG-DFI according to an index of CG configuration. For example, the user terminal 20 applies a TPC command in a CG-DFI to a CG configuration having the largest index or a CG configuration having the smallest index, among active CG configurations.

For example, in a case where the TPC command is applied to a CG where the index is the largest, when CG1 (1 is an index), CG2, and CG3 are configured in the user terminal 20, the user terminal 20 applies the TPC command in the CG-DFI to PUSCH transmission of CG3.

### <Example 2-3>

In Example 2-3, the user terminal 20 applies a TPC command in a CG-DFI to one or more CG configurations of high (or low) priority among all active CG configurations. Here, the priority is information representing a priority among a plurality of CG configurations, for example, information configured from the base station apparatus 10 to the user terminal 20 by an RRC message. The RRC message may be a message that configures a CG. The information indicating the priority is, for example, "priority-r16". The priority may be information such as high, low, or a numerical value.

For example, in a case where the priority is expressed as a number from 1 to 5 and the lower the number is, the higher the priority is, it is assumed that a TPC command in a CG-DFI is applied to a CG configuration where the priority value is 2 or less. In this case, when CG1 (priority = 1), CG2 (priority = 2), and CG3 (priority = 5) are configured to the user terminal 20, the user terminal 20 applies a TPC command in a CG-DFI to PUSCH transmission of CG1 and CG2.

### <Examples 2-4>

In Example 2-4, the user terminal 20 applies a TPC command in a CG-DFI to one or more CG configurations corresponding to PUSCH in which HARQ-ACK of the CG-DFI is NACK among all active CG configurations.

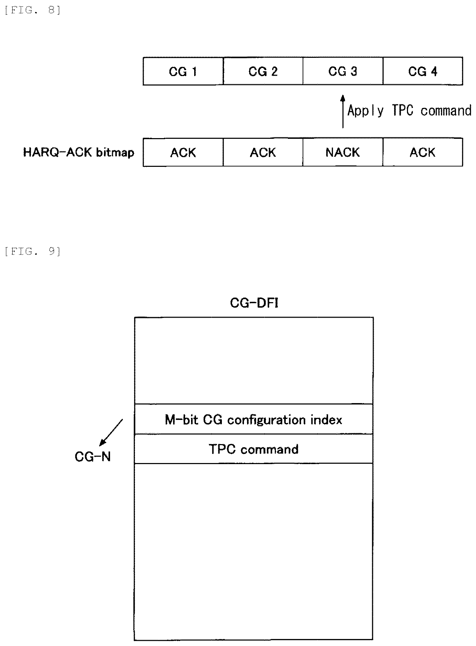

For example, assuming that as active CG configurations, as shown in Fig. 8, CG1 to CG4 are configured in the user terminal 20. For example, if the user terminal 20 receives from the base station apparatus 10 a CG-DFI including a HARQ-ACK bitmap having HARQ-ACK for each of PUSCH transmission of CG1, PUSCH transmission of CG2, PUSCH transmission of CG3, and PUSCH transmission of CG4, and HARQ-ACK for PUSCH transmission of CG3 is NACK, the user terminal 20 applies a TPC command in the CG-DFI to PUSCH transmission of CG3.

### <Example 2-5>

In Example 2-5, in a CG-DFI received from the base station apparatus 10, an M-bit CG configuration index field (configured grant configuration index field) is provided before or after "TPC command for scheduled PUSCH." The value of the CG configuration index field indicates a CG configuration to which a TPC command in the CG-DFI is applied. The user terminal 20 applies the TPC command included in the CG-DFI in PUSCH transmission in the CG configuration corresponding to the value of the CG configuration index field.

FIG. 9 shows an example of a CG-DFI in Example 2-5. In the example of FIG. 9, an M bit CG configuration index field is provided immediately prior to the field "TPC command for scheduled PUSCH". Note that, this arrangement is only an example.

In a BWP, the maximum number of CG configurations that can be configured in the user terminal 20 is, for example, 12. Thus, M is an integer that satisfies, for example, 0≦M ≦12. The value of M may be an integer that satisfies the value 0≦M≦4. The value of M may depend on the number of CG configurations configured in BWP.

### <Examples 2-6>

In Example 2-6, TPC commands for each of one or more active CG configurations are included in a CG-DFI received from the base station apparatus 10. For example, in a CG-DFI, N TPC commands are mapped in an ascending order of active CG configurations. N is an integer that satisfies, for example, 0≦N≦12.

The user terminal 20 applies a TPC command at a bit position of the field corresponding to a CG configuration for PUSCH transmission by the CG configuration.

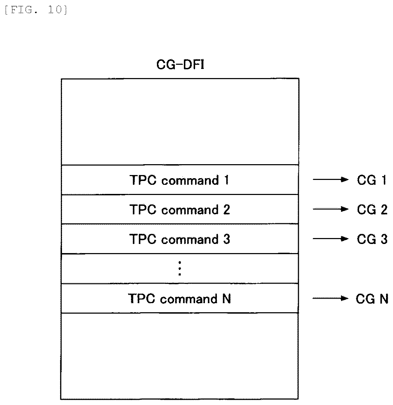

FIG. 10 shows an example of a CG-DFI in Example 2-6. In the example of Fig. 10, N TPC command fields are arranged in ascending order of bit positions, for example, TPC command 1 in the first TPC command field corresponds to CG1, and TPC command N in the Nth TPC command field corresponds to CG-N.

According to the Example 2 described above, when multiple CGs are configured, the user terminal 20 can clearly determine a CG to which the TPC command included in the CG-DFI is applied.

### (Example 3)

Example 3 is an example in which twoPUSCH-PC-AdjustmentStates is configured to the user terminal 20. The twoPUSCH-PC-AdjustmentStates is information contained in PUSCH-PowerControl information element which is configured by the base station apparatus 20 to the user terminal 10.

For transmission (or retransmission) in CG-PUSCH, that is, for PUSCH transmission (or retransmission) in CG configuration by ConfiguredGrantConfig, the user terminal 20 applies a TPC command included in a CG-DFI to a power control loop (value of l (L), specifically l=0 or l=1) specified by powerControlLoopToUse of the CG configuration. The powerControlLoopToUse is included in configuration information (ConfiguredGrantConfig) for CG configuration.

For example, when CG1 having powerControlLoopToUse = 1 is configured to the user terminal 20, the user terminal 20 applies a TPC command of a CG-DFI to power control of a loop of l = 1 in PUSCH transmission (or retransmission) in the CG1.

When twoPUSCH-PC-AdjustmentStates is configured to the user terminal 20, there are following operations of Examples 3-1 to 3-3 for dynamic PUSCH.

### <Example 3-1>

In Example 3-1, the user terminal 20 always applies a TPC command in a CG-DFI to power control of a loop of l=0 for PUSCH transmission scheduled by an UL grant. The user terminal 20 may also always apply a TPC command in a CG-DFI to power control of l=1 loop for PUSCH transmission scheduled by an UL grant.

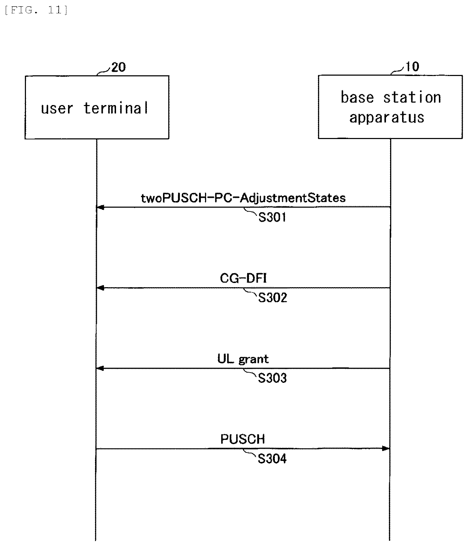

An operation example of Example 3-1 will be described with reference to Fig. 11. In S301, the user terminal 20 receives twoPUSCH-PC-AdjustmentStates from the base station apparatus 10. Thus, the user terminal 20 has two power control states (that is, f_{b,f,c}(i,0) and f_{b,f,c}(i,1)) with respect to PUSCH transmission.

In S302, the user terminal 20 receives a CG-DFI from the base station apparatus 10. In S303, the user terminal 20 receives an UL grant that dynamically schedules PUSCH transmission.

In S304, the user terminal 20 transmits data by the PUSCH scheduled in S303. In S304, the user terminal 20 applies a TPC command included in the CG-DFI received at S302 to a loop of l=0 to perform power control for PUSCH transmission.

### <Example 3-2>

In Example 3-2, when the user terminal 20 is scheduled to perform PUSCH transmission by DCI format 0_0 or DCI format 0_1 without SRI (SRS resource indicator) field from the base station apparatus 10, the user terminal 20 always applies a TPC command in the CG-DFI, for the scheduled PUSCH transmission, to power control of a loop of l=0.

Further, when the user terminal 20 is not configured with SRI-PUSCH-PowerControl from the base station apparatus 10, the user terminal 20 always applies a TPC command in the CG-DFI to power control of a loop of l=0 for the PUSCH transmission scheduled by the UL grant.

In addition, when SRI-PUSCH-PowerControl (including Sri-PUSCH-PowerControlId and Sri-PUSCH-ClosedLoopIndex) is configured to the user terminal 20 from the base station apparatus10 by a PUSCH-PowerControl information element, the user terminal 20 obtains a mapping between a value in a SRI field of DCI format 0_1 (corresponding to Sri-PUSCH-PowerControlId) and a value (equal to or greater than 1) of l (L) provided by sri-PUSCH-ClosedLoopIndex.

When PUSCH transmission is scheduled to the user terminal 20 by a DCI format 0_1 including an SRI field, the user terminal 20 applies a TPC command in a CG-DFI to power control of a loop of a value of l(L) corresponding to a value of the SRI field.

An operation example of Example 3-2 will be described with reference to Fig. 11. In S301, the user terminal 20 receives twoPUSCH-PC-AdjustmentStates from the base station apparatus 10. Accordingly, the user terminal 20 has two power control states (that is, f_{b,f,c}(i,0) and f_{b,t,c}(i,1)) with respect to PUSCH transmission. Further, it is assumed that SRI-PUSCH-PowerControl is configured in the user terminal 20.

In S302, the user terminal 20 receives a CG-DFI from the base station apparatus 10. In S303, the user terminal 20 receives an UL grant (DCI format 0_1 including the SRI field) that dynamically schedules PUSCH transmission.

In S304, the user terminal 20 transmits data by a PUSCH scheduled in S303. In S304, the user terminal 20 applies a TPC command included in the CG-DFI received at S302 to a loop of a value (a value of sri-PUSCH-ClosedLoopIndex) of l (L) corresponding to the value of the SRI field of DCI format 0_1 to perform power control of PUSCH transmission.

### <Example 3-3>

In Example 3-3, in the CG-DFI received from the base station apparatus 10, a closed loop indicator field of one bit (which may be larger than one bit) is provided before or after "TPC command for scheduled PUSCH". The value of the closed loop indicator field indicates a loop to which a TPC command in the CG-DFI is applied. The user terminal 20 applies a TPC command included in the CG-DFI to power control of a loop corresponding to the value of the closed loop indicator field in PUSCH transmission.

When a higher layer parameter (twoPUSCH-PC-AdjustmentStates) is not configured from the base station apparatus 10 to the user terminal 20, the closed loop indicator field is 0 bits.

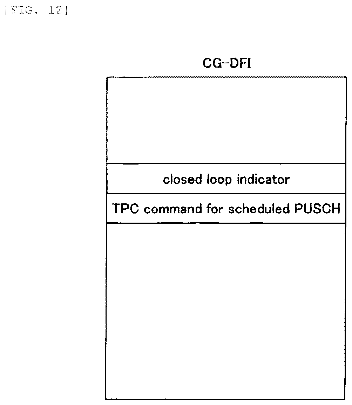

Fig. 12 shows an example of a CG-DFI in Example 3-3. In the example of FIG. 12, the closed loop indicator field is provided immediately prior to the field "TPC command for scheduled PUSCH". Note that, this arrangement is only an example.

According to the Example 3 described above, the user terminal 20 can clearly determine a loop to which a TPC command included in the CG-DFI is applied.

### (Example 4)

Example 4 is an example describing whether the user terminal 20 uses a value of a TPC command in a CG-DFI as an absolute value or as an accumulative value (cumulative value). Hereinafter, Examples 4-1 and 4-2 will be described.

### <Example 4-1>

In Example 4-1, the user terminal 20 uses a TPC command value in a CG-DFI as an absolute value without accumulation. For example, the user terminal 20 uses the value of the TPC command as a value of f_{b,f,c}(i,l) in calculating transmission power for PUSCH transmission to which the TPC command in the CG-DFI is applied.

### <Example 4-2>

In Example 4-2, the user terminal 20 determines whether to use a value of a TPC command in the CG-DFI as an absolute value or as an accumulation value for PUSCH transmission (schedule-based or CG-based) by tpc-Accumulation for the PUSCH transmission. The tpc-Accumulation is information configured from the base station apparatus 10 to the user terminal 20 by PUSCH-PowerControl information element.

If tpc-Accumulation is enabled, the value of the TPC command is used as an accumulation value. If tpc-Accumulation is not enabled, the value of the TPC command is used as an absolute value. If tpc-Accumulation is not configured to the user terminal 20, it is enabled and the value of the TPC command is used as an accumulation value.

According to the Example 4 described above, the user terminal 20 can clearly determine whether the value of the TPC command included in the CG-DFI is an absolute value or an accumulation value.

### (Equipment configuration)

Next, a functional configuration example of the base station apparatus 10 and the user terminal 20 that perform the processing and operations described above will be described.

### <Base Station Apparatus 10>

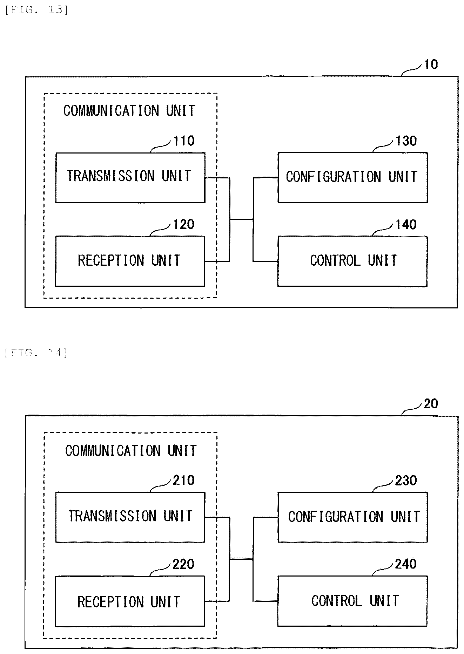

Fig. 13 is a diagram illustrating an example of a functional configuration of the base station apparatus 10. As shown in Fig. 13, the base station apparatus 10 includes a transmission unit 110, a reception unit 120, a configuration unit 130, and a control unit 140. The functional configuration shown in FIG. 13 is only one example. If the operation according to the embodiments of the present invention can be performed, the functional category and the name of the functional unit may be any one. The transmission unit 110 and the reception unit 120 may be collectively referred to as a communication unit.

The transmission unit 110 includes a function for generating a signal to be transmitted to the user terminal 20 side and transmitting the signal wirelessly. The receiving unit 120 includes a function for receiving various signals transmitted from the user terminal 20 and acquiring, for example, information of a higher layer from the received signals. The transmission unit 110 has a function to transmit NR-PSS, NR-SSS, NR-PBCH, and DL/UL control signals, DCI by PDCCH, data by PDSCH, and the like to the user terminal 20.

The configuration unit 130 stores preconfigured configuration information and various configuration information to be transmitted to the user terminal 20 in the storage device provided by the configuration unit 130 and reads the preconfigured configuration information from the storage device as necessary.

The control unit 140 schedules the DL reception or UL transmission of the user terminal 20 through the transmission unit 110. The control unit 140 includes a function for performing an LBT. A functional unit related to signal transmission in the control unit 140 may be included in the transmission unit 110, and a functional unit related to signal reception in the control unit 140 may be included in the receiving unit 120. The transmission unit 110 may be called a transmitter, and the reception unit 120 may be called a receiver.

### <User terminal 20>

Fig. 14 is a diagram illustrating an example of the functional configuration of the user terminal 20. As shown in Fig. 14, the user terminal 20 includes a transmission unit 210, a reception unit 220, a configuration unit 230, and a control unit 240. The functional configuration shown in FIG. 14 is only one example. If the operation according to the embodiments of the present invention can be performed, the functional category and the name of the functional unit may be any one. The transmission unit 210 and the reception unit 220 may be collectively referred to as a communication unit. The user terminal 20 may be referred to as a terminal.

The transmission unit 210 creates a transmission signal from the transmission data and wirelessly transmits the transmission signal. The receiving unit 220 receives various signals wirelessly and acquires signals from higher layers from the received signal of the physical layer. The reception unit 220 has a function to receive the NR-PSS, NR-SSS, NR-PBCH, and DL/UL/SL control signals transmitted from the base station apparatus 10, the DCI by the PDCCH, data by the PDSCH, and the like. For example, the transmission unit 210 may transmit PSCCH (Physical Sidelink Control Channel), PSSCH (Physical Sidelink Shared Channel), PSDCH (Physical Sidelink Discovery Channel), PSBCH (Physical Sidelink Broadcast Channel), etc. to another user terminal 20 as D2D communication, and the receiving unit 120 may receive PSCCH, PSSCCH, PSDCH, PSDCH, or PSBCH, etc. from another user terminal 20.

The configuration unit 230 stores various configuration information received from the base station apparatus 10 or other user terminals by the receiving unit 220 in a storage device provided by the setting unit 230 and reads it from the storage device as necessary. The configuration unit 230 also stores preconfigured configuration information.

The control unit 240 performs control of the user terminal 20. The control unit 240 includes a function for performing LBT. A functional unit related to signal transmission in the control unit 240 may be included in the transmission unit 210, and a functional unit related to signal reception in the control unit 240 may be included in the reception unit 220. The transmission unit 210 may be referred to as a transmitter, and the reception unit 220 may be referred to as a receiver. The carrier sense in the LBT may be performed by the reception unit 220 or by the transmission unit 210.

### [Summary]

According to the present embodiment, at least a terminal and a transmission power control method shown in the following items 1 to 6 are provided.

### (Item 1)

A terminal including:
a reception unit 220 configured to receive feedback information for uplink transmission based on a configured grant from a base station apparatus;
a control unit 240 configured to determine an application target of a transmission power control command included in the feedback information; and
a transmission unit 210 configured to apply the transmission power control command to uplink transmission of the application target.

### (Item 2)

The terminal as described in item 1,
wherein the control unit is configured to determine, as the application target, uplink transmission scheduled by a dynamic uplink transmission grant, retransmission for uplink transmission for which NACK is indicated as HARQ-ACK information in the feedback information, or uplink transmission based on a configured grant.

### (Item 3)

The terminal as described in item 1 or 2,
wherein, when the terminal has a plurality of active configured grants, the control unit is configured to select one or more configured grants as the application target from the plurality of active configured grants based on an index of a configured grant, a priority of a configured grant, or HARQ-ACK information in the feedback information.

### (Item 4)

The terminal as described in item 1 or 2,
wherein, when the terminal has a plurality of active configured grants, the control unit is configured to select a configured grant designated by the feedback information as the application target from the plurality of active configured grants.

### (Item 5)

The terminal as described in any one of items 1-4,
wherein, when the terminal is configured by the base station apparatus to perform power control of uplink transmission in a plurality of loops, the control unit is configured to determine a loop to which a transmission power control command included in the feedback information is applied based on configuration information received from the base station apparatus.

### (Item 6)

A transmission power control method executed by a terminal, the method comprising:
a step of receiving feedback information for uplink transmission based on a configured grant from a base station apparatus;
a step of determining an application target of a transmission power control command included in the feedback information; and
a step of applying the transmission power control command to uplink transmission of the application target.

According to any of items 1-6, there is provided a technique, in a wireless communication system, that can properly apply a transmission power control command included in feedback information transmitted from the base station apparatus to the user terminal.

### (Hardware configuration)

The block diagrams (Fig. 13 and Fig. 14) used in the description of the embodiment described above illustrate the block of functional unit. Such function blocks (configuration parts) are attained by at least one arbitrary combination of hardware and software. In addition, an attainment method of each of the function blocks is not particularly limited. That is, each of the function blocks may be attained by using one apparatus that is physically or logically coupled, by directly or indirectly (for example, in a wired manner, over the radio, or the like) connecting two or more apparatuses that are physically or logically separated and by using such a plurality of apparatuses. The function block may be attained by combining one apparatus described above or a plurality of apparatuses described above with software.

The function includes determining, determining, judging, calculating, computing, processing, deriving, investigating, looking up, ascertaining, receiving, transmitting, output, accessing, resolving, selecting, choosing, establishing, comparing, assuming, expecting, presuming, broadcasting, notifying, communicating, forwarding, configuring, reconfiguring, allocating (mapping), assigning, and the like, but is not limited thereto. For example, a function block (a configuration part) that functions transmission is referred to as the transmitting unit or the transmitter. As described above, the attainment method thereof is not particularly limited.

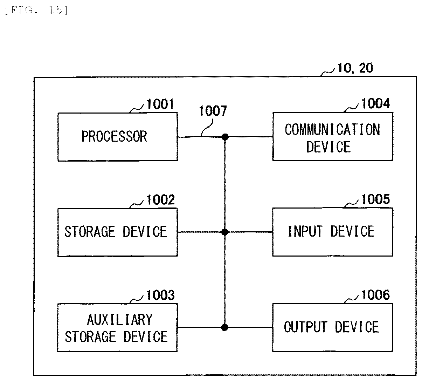

For example, the base station apparatus 10, the user terminal 20, and the like in one embodiment of this disclosure may function as a computer for performing the processing of a radio communication method of this disclosure. Fig. 15 is a diagram illustrating an example of a hardware configuration of the base station apparatus 10 and the user terminal 20 according to one embodiment of this disclosure. The base station apparatus 10 and the user terminal 20 described above may be physically configured as a computer apparatus including a processor 1001, a storage unit 1002, an auxiliary storage unit 1003, a communication unit 1004, an input unit 1005, an output unit 1006, a bus 1007, and the like.

Note that, in the following description, the word "apparatus" can be replaced with a circuit, a device, a unit, or the like. The hardware configuration of the base station apparatus 10 and the user terminal 20 may be configured to include one or a plurality of apparatuses illustrated in the drawings, or may be configured not to include a part of the apparatuses.

Each function of the base station apparatus 10 and the user terminal 20 is attained by reading predetermined software (a program) on hardware such as the processor 1001 and the storage unit 1002 such that the processor 1001 performs an operation, and by controlling the communication of the communication unit 1004 or by controlling at least one of reading and writing of data in the storage unit 1002 and the auxiliary storage unit 1003.

The processor 1001, for example, controls the entire computer by operating an operating system. The processor 1001 may be configured by a central processing unit (CPU) including an interface with respect to the peripheral equipment, a control apparatus, an operation apparatus, a register, and the like. For example, the control unit 140, the control unit 240, or the like, described above, may be attained by the processor 1001.

In addition, the processor 1001 reads out a program (a program code), a software module, data, and the like to the storage unit 1002 from at least one of the auxiliary storage unit 1003 and the communication unit 1004, and thus, executes various processings. A program for allowing a computer to execute at least a part of the operation described in the embodiment described above is used as the program. For example, the control unit 140 of the base station apparatus 10 illustrated in Fig. 13 may be attained by a control program that is stored in the storage unit 1002 and is operated by the processor 1001. In addition, for example, the control unit 240 of the user terminal 20 illustrated in Fig. 14 may be attained by a control program that is stored in the storage unit 1002 and is operated by the processor 1001. It has been described that the various processings described above are executed by one processor 1001, but the processings may be simultaneously or sequentially executed by two or more processors 1001. The processor 1001 may be mounted on one or more chips. Note that, the program may be transmitted from a network through an electric communication line.

The storage unit 1002 is a computer readable recording medium, and for example, may be configured of at least one of a read only memory (ROM), an erasable programmable ROM (EPROM), an electrically erasable programmable ROM (EEPROM), a random access memory (RAM), and the like. The storage unit 1002 may be referred to as a register, a cache, a main memory (a main storage unit), and the like. The storage unit 1002 is capable of retaining a program (a program code) that can be executed in order to implement a communication method according to one embodiment of this disclosure, a software module, and the like.

The auxiliary storage unit 1003 is a computer readable recording medium, and for example, may be configured of at least one of an optical disk such as a compact disc ROM (CD-ROM), a hard disk drive, a flexible disk, a magnetooptical disk (for example, a compact disc, a digital versatile disk, and a Blu-ray (Registered Trademark) disk), a smart card, a flash memory (for example, a card, a stick, a key drive), a floppy (Registered Trademark) disk, a magnetic strip, and the like. The auxiliary storage unit 1003 may be referred to as an auxiliary storage unit. The storage medium described above, for example, may be a database including at least one of the storage unit 1002 and the auxiliary storage unit 1003, a server, and a suitable medium.

The communication unit 1004 is hardware for performing communication with respect to the computer through at least one of a wire network and a radio network (a transmitting and receiving device), and for example, is also referred to as a network device, a network controller, a network card, a communication module, and the like. The communication unit 1004, for example, may be configured by including a high frequency switch, a duplexer, a filter, a frequency synthesizer, and the like, in order to attain at least one of frequency division duplex (FDD) and time division duplex (TDD). For example, a transmitting and receiving antenna, an amplifier, a transmitting and receiving unit, a transmission path interface, and the like may be attained by the communication unit 1004. In the transmitting and receiving unit, the transmitting unit and the receiving unit are mounted by being physically or logically separated.

The input unit 1005 is an input device for receiving input from the outside (for example, a keyboard, a mouse, a microphone, a switch, a button, a sensor, and the like). The output unit 1006 is an output device for implementing output with respect to the outside (for example, a display, a speaker, an LED lamp, and the like). Note that, the input unit 1005 and the output unit 1006 may be integrally configured (for example, a touch panel) .

In addition, each of the apparatuses such as the processor 1001 and the storage unit 1002 may be connected by the bus 1007 for performing communication with respect to information. The bus 1007 may be configured by using a single bus, or may be configured by using buses different for each of the apparatuses.

In addition, the base station apparatus 10 and the user terminal 20 may be configured by including hardware such as a microprocessor, a digital signal processor (DSP), an application specific integrated circuit (ASIC), a programmable logic device (PLD), and a field programmable gate array (FPGA), and a part or all of the respective function blocks may be attained by the hardware. For example, the processor 1001 may be mounted by using at least one of the hardware.

### (Supplement to Embodiment)

As described above, the embodiment of the invention has been described, but the disclosed invention is not limited to the embodiment, and a person skilled in the art will understand various modification examples, correction examples, alternative examples, substitution examples, and the like. Specific numerical examples have been described in order to facilitate the understanding of the invention, but the numerical values are merely an example, and any appropriate values may be used, unless otherwise specified. The classification of the items in the above description is not essential to the invention, and the listings described in two or more items may be used by being combined, as necessary, or the listing described in one item may be applied to the listing described in another item (insofar as there is no contradiction) . A boundary between the functional parts or the processing parts in the function block diagram does not necessarily correspond to a boundary between physical components. The operations of a plurality of functional parts may be physically performed by one component, or the operation of one functional part may be physically performed by a plurality of components. In a processing procedure described in the embodiment, a processing order may be changed, insofar as there is no contradiction. For the convenience of describing the processing, the base station apparatus 10 and the user terminal 20 have been described by using a functional block diagram, but such an apparatus may be attained by hardware, software, or a combination thereof. Each of software that is operated by a processor of the base station apparatus 10 according to the embodiment of the invention and software that is operated by a processor of the user terminal 20 according to the embodiment of the invention may be retained in a random access memory (RAM), a flash memory, a read only memory (ROM), an EPROM, an EEPROM, a register, a hard disk (HDD), a removable disk, a CD-ROM, a database, a server, and other suitable recording media.

In addition, the notification of the information is not limited to the aspect/embodiment described in this disclosure, and may be performed by using other methods. For example, the notification of the information may be implemented by physical layer signaling (for example, downlink control information (DCI) and uplink control information (UCI)), higher layer signaling (for example, radio resource control (RRC) signaling, medium access control (MAC) signaling, broadcast information (a master information block (MIB)), a system information block (SIB)), other signals, or a combination thereof. In addition, the RRC signaling may be referred to as an RRC message, and for example, may be an RRC connection setup message, an RRC connection reconfiguration message, and the like.

Each aspect/embodiments described in this disclosure may be applied to a system using long term evolution (LTE), LTE-advanced (LTE-A), SUPER 3G, IMT-advanced, a 4th generation mobile communication system (4G), a 5th generation mobile communication system (5G), future radio access (FRA), new radio (NR), W-CDMA (Registered Trademark), GSM (Registered Trademark), CDMA2000, an ultra mobile broadband (UMB), IEEE 802.11 (Wi-Fi (Registered Trademark)), IEEE 802.16 (WiMAX (Registered Trademark)), IEEE 802.20, an ultra-wideband (UWB), Bluetooth (Registered Trademark), and other suitable systems and a next-generation system that is expanded on the basis thereof. In addition, a combination of a plurality of systems (for example, a combination of at least one of LTE and LTE-A and 5G, and the like) may be applied.

In the processing procedure, the sequence, the flowchart, and the like of each aspect/embodiment described herein, the order may be changed, insofar as there is no contradiction. For example, in the method described in this disclosure, the elements of various steps are presented by using an exemplary order, but are not limited to the presented specific order.

Here, a specific operation that is performed by the base station apparatus 10 may be performed by an upper node, in accordance with a case. In a network provided with one or a plurality of network nodes including the base station apparatus 10, it is obvious that various operations that are performed in order for communication with respect to the user terminal 20 can be performed by at least one of the base station apparatus 10 and network nodes other than the base station apparatus 10 (for example, MME, S-GW, or the like is considered as the network node, but the network node is not limited thereto) . In the above description, a case is exemplified in which the number of network nodes other than the base station apparatus 10 is 1, but a plurality of other network nodes may be combined (for example, the MME and the S-GW).

The information, the signal, or the like described in this disclosure can be output to a lower layer (or the higher layer) from the higher layer (or the lower layer). The information, the signal, or the like may be input and output through a plurality of network nodes.

The information or the like that is input and output may be retained in a specific location (for example, a memory), or may be managed by using a management table. The information or the like that is input and output can be subjected to overwriting, updating, or editing. The information or the like that is output may be deleted. The information or the like that is input may be transmitted to the other apparatuses.

Judgment in this disclosure may be performed by a value represented by 1 bit (0 or 1), may be performed by a truth-value (Boolean: true or false), or may be performed by a numerical comparison (for example, a comparison with a predetermined value) .

Regardless of whether the software is referred to as software, firmware, middleware, a microcode, and a hardware description language, or is referred to as other names, the software should be broadly interpreted to indicate a command, a command set, a code, a code segment, a program code, a program, a sub-program, a software module, an application, a software application, a software package, a routine, a sub-routine, an object, an executable file, an execution thread, a procedure, a function, and the like.

In addition, software, a command, information, and the like may be transmitted and received through a transmission medium. For example, in a case where the software is transmitted from a website, a server, or other remote sources by using at least one of a wire technology (a coaxial cable, an optical fiber cable, a twisted pair, a digital subscriber line (DSL), and the like) and a radio technology (an infrared ray, a microwave, and the like), at least one of the wire technology and the radio technology is included in the definition of the transmission medium.

The information, the signal, and the like described in this disclosure may be represented by using any of various different technologies. For example, the data, the command, the command, the information, the signal, the bit, the symbol, the chip, and the like that can be referred to through the entire description described above may be represented by a voltage, a current, an electromagnetic wave, a magnetic field or magnetic particles, an optical field or a photon, or an arbitrary combination thereof.

Note that, the terms described in this disclosure and the terms necessary for understanding this disclosure may be replaced with terms having the same or similar meaning. For example, at least one of the channel and the symbol may be a signal (signaling). In addition, the signal may be a message. In addition, a component carrier (CC) may be referred to as a carrier frequency, a cell, a frequency carrier, and the like.

The terms "system" and "network" used in this disclosure are interchangeably used.

In addition, the information, the parameter, and the like described in this disclosure may be represented by using an absolute value, may be represented by using a relative value from a predetermined value, or may be represented by using another corresponding information. For example, a radio resource may be indicated by an index.

The names used in the parameters described above are not a limited name in any respect. Further, expressions or the like using such parameters may be different from those explicitly disclosed in this disclosure. Various channels (for example, PUSCH, PUCCH, PDCCH, and the like) and information elements can be identified by any suitable name, and thus, various names that are allocated to such various channels and information elements are not a limited name in any respect.

In this disclosure, the terms "base station (BS)", "radio base station", "base station apparatus", "fixed station", "NodeB", "eNodeB (eNB)", "gNodeB (gNB)", "access point", "transmission point", "reception point", "transmission and reception point", "cell", "sector", "cell group", "carrier", "component carrier", and the like can be interchangeably used. The base station may be referred to by a term such as a macrocell, a small cell, a femtocell, and a picocell.

The base station is capable of accommodating one or a plurality of (for example, three) cells. In a case where the base station accommodates a plurality of cells, the entire coverage area of the base station can be classified into a plurality of small areas, and each of the small areas is capable of providing communication service by a base station sub-system (for example, an indoor type small base station (a remote radio head (RRH)). The term "cell" or "sector" indicates a part of the coverage area or the entire coverage area of at least one of the base station and the base station sub-system that perform the communication service in the coverage.

In this disclosure, the terms "mobile station (MS)", "user terminal", "user equipment (UE)", and "terminal" can be interchangeably used.

The mobile station may be referred to as a subscriber station, a mobile unit, a subscriber unit, a wireless unit, a remote unit, a mobile device, a wireless device, a wireless communication device, a remote device, a mobile subscriber station, an access terminal, a mobile terminal, a terminal, a wireless terminal, a remote terminal, a handset, a user agent, a mobile client, a client, or other suitable terms, by a person skilled in the art.

At least one of the base station and the mobile station may be referred to as a transmitting apparatus, a receiving apparatus, a communication unit, and the like. Note that, at least one of the base station and the mobile station may be a device that is mounted on a mobile object, the mobile object itself, or the like. The mobile object may be a vehicle (for example, a car, an airplane, and the like), may be a mobile object that is moved in an unmanned state (for example, a drone, an autonomous driving car, and the like), or may be a (manned or unmanned) robot. Note that, at least one of the base station and the mobile station also includes an apparatus that is not necessarily moved at the time of a communication operation. For example, at least one of the base station and the mobile station may be an internet of things (IoT) device such as a sensor.

In addition, the base station apparatus in this disclosure may be replaced with the user terminal. For example, each aspect/embodiment of this disclosure may be applied to a configuration in which communication between the base station apparatus and the user terminal is replaced with communication in a plurality of user terminals 20 (for example, may be referred to as device-to-device (D2D), vehicle-to-everything (V2X), and the like). In this case, the function of the base station apparatus 10 described above may be provided in the user terminal 20. In addition, the words "up", "down", and the like may be replaced with words corresponding to the communication between the terminals (for example, "side"). For example, an up channel, a down channel, and the like may be replaced with a side channel.

Similarly, the user terminal in this disclosure may be replaced with the base station apparatus. In this case, the function of the user terminal described above may be provided in the base station apparatus.

The terms "determining" and "determining" used in this disclosure may involve diverse operations. "Determining" and "determining", for example, are capable of including "determining" and "determining" with respect to judging, calculating, computing, processing, deriving, investigating, looking up (search, inquiry) (for example, looking up in a table, a database, or another data structure), and ascertaining, and the like. In addition, "determining" and "determining" are capable of including "determining" and "determining" with respect to receiving (for example, receiving information), transmitting (for example, transmitting information), input, output, and accessing (for example, accessing data in a memory), and the like. In addition, "determining" and "determining" are capable of including "determining" and "determining" with respect to resolving, selecting, choosing, establishing, comparing, and the like. That is, "determining" and "determining" are capable of including "determining" and "determining" with respect to any operation. In addition, "determining (determining)" may be replaced with "assuming", "expecting", "considering", and the like.

The terms "connected" and "coupled", or any modification thereof indicate any direct or indirect connection or couple in two or more elements, and are capable of including a case where there are one or more intermediate elements between two elements that are "connected" or "coupled" to each other. The couple or connection between the elements may be physical couple or connection, may be logical couple or connection, or may be a combination thereof. For example, the "connection" may be replaced with "access". In the case of being used in this disclosure, it is possible to consider that two elements are "connected" or "coupled" to each other by using at least one of one or more electric wires, cables, and print electric connection, and as some non-limiting and non-inclusive examples, by using electromagnetic energy having a wavelength of a radio frequency domain, a microwave domain, and an optical (visible and invisible) domain, and the like.

The reference signal can also be abbreviated as RS, and may be referred to as pilot on the basis of a standard to be applied.

The description "on the basis of" that is used in this disclosure does not indicate "only on the basis of", unless otherwise specified. In other words, the description "on the basis of" indicates both "only on the basis of" and "at least on the basis of".

Any reference to elements using the designations "first," "second," and the like, used in this disclosure, does not generally limit the amount or the order of such elements. Such designations can be used in this disclosure as a convenient method for discriminating two or more elements. Therefore, a reference to a first element and a second element does not indicate that only two elements can be adopted or the first element necessarily precedes the second element in any manner.

"Means" in the configuration of each of the apparatuses described above may be replaced with "unit", "circuit", "device", and the like.

In this disclosure, in a case where "include", "including", and the modification thereof are used, such terms are intended to be inclusive, as with the term "comprising". Further, the term "or" that is used in this disclosure is not intended to be exclusive-OR.

A radio frame may be configured of one or a plurality of frames in a time domain. Each of one or a plurality of frames in the time domain may be referred to as a subframe . The subframe may be further configured of one or a plurality of slots in the time domain. The subframe may be a fixed time length (for example, 1 ms) that does not depend on numerology.

The numerology may be a communication parameter to be applied to at least one of the transmission and the reception of a certain signal or channel. The numerology, for example, may indicate at least one of subcarrier spacing (SCS), a bandwidth, a symbol length, a cyclic prefix length, a transmission time interval (TTI), the number of symbols per TTI, a radio frame configuration, specific filtering processing that is performed by the transceiver in a frequency domain, specific windowing processing that is performed by the transceiver in a time domain, and the like.

The slot may be configured of one or a plurality of symbols (an orthogonal frequency division multiplexing (OFDM) symbol, a single carrier frequency division multiple access (SC-FDMA) symbol, and the like) in a time domain. The slot may be time unit based on the numerology.

The slot may include a plurality of mini slots. Each of the mini slots may be configured of one or a plurality of symbols in the time domain. In addition, the mini slot may be referred to as a subslot. The mini slot may be configured of symbols of which the number is less than that of the slot. PDSCH (or PUSCH) to be transmitted in time unit greater than the mini slot may be referred to as a PDSCH (or PUSCH) mapping type A. PDSCH (or PUSCH) to be transmitted by using the mini slot may be referred to as a PDSCH (or PUSCH) mapping type B.

All of the radio frame, the subframe, the slot, the mini slot, and the symbol represent time unit at the time of transmitting a signal. Other designations respectively corresponding to the radio frame, the subframe, the slot, the mini slot, and the symbol may be used.

For example, one subframe may be referred to as a transmission time interval (TTI), a plurality of consecutive subframes may be referred to as TTI, or one slot or one mini slot may be referred to as TTI. That is, at least one of the subframe and TTI may be a subframe (1 ms) in the existing LTE, may be a period shorter than 1 ms (for example, 1 to 13 symbols), or may be a period longer than 1 ms. Note that, unit representing TTI may be referred to as a slot, a mini slot, and the like, but not a subframe. Also, one slot may be called a unit time. The unit time may be different in each cell according to numerology.

Here, TTI, for example, indicates minimum time unit of scheduling in radio communication. For example, in an LTE system, the base station performs scheduling for allocating a radio resource (a frequency bandwidth, transmission power, and the like that can be used in each of the user terminals 20) in TTI unit, with respect to each of the terminals 20. Note that, the definition of TTI is not limited thereto.

TTI may be transmission time unit of a data packet (a transport block), a code block, a codeword, and the like that are subjected to channel coding, or may be processing unit of scheduling, link adaptation, and the like. Note that, when TTI is applied, a time zone in which the transport block, the code block, the codeword, and the like are actually mapped (for example, the number of symbols) may be shorter than TTI.

Note that, in a case where one slot or one mini slot is referred to as TTI, one or more TTIs (that is, one or more slots or one or more mini slots) may be the minimum time unit of the scheduling. In addition, the number of slots (the number of mini slots) configuring the minimum time unit of the scheduling may be controlled.

TTI having a time length of 1 ms may be referred to as a common TTI (TTI in LTE Rel.8-12), a normal TTI, a long TTI, a common subframe, a normal subframe, a long subframe, a slot, and the like. TTI shorter than the common TTI may be referred to as a shortened TTI, a short TTI, a partial TTI (or a fractional TTI), a shortened subframe, a short subframe, a mini slot, a subslot, a slot, and the like.

Note that, the long TTI (for example, the common TTI, the subframe, and the like) may be replaced with TTI having a time length of greater than or equal to 1 ms, and the short TTI (for example, the shortened TTI and the like) may be replaced with TTI having a TTI length of less than a TTI length of the long TTI and greater than or equal to 1 ms.

The resource block (RB) is resource allocation unit of the time domain and the frequency domain, and may include one or a plurality of consecutive subcarriers in the frequency domain. The number of subcarriers included in RB may be the same regardless of the numerology, or for example, may be 12. The number of subcarriers included in RB may be determined on the basis of the numerology.

In addition, the time domain of RB may include one or a plurality of symbols, or may be the length of one slot, one mini slot, one subframe, or one TTI. One TTI, one subframe, and the like may be respectively configured of one or a plurality of resource blocks.

Note that, one or a plurality of RBs may be referred to as a physical resource block (physical RB: PRB), a sub-carrier group (SCG), a resource element group (REG), a PRB pair, a RB pair, and the like.

In addition, the resource block may be configured of one or a plurality of resource elements (RE). For example, one RE may be a radio resource domain of one subcarrier and one symbol.

A bandwidth part (BWP) (may be referred to as a part bandwidth or the like) may represent a subset of consecutive common resource blocks (common RBs) for certain numerology, in a certain carrier. Here, the common RB may be specified by an index of RB based on a common reference point of the carrier. PRB may be defined by a certain BWP, and may be numbered within BWP.

BWP may include BWP for UL (UL BWP) and BWP for DL (DL BWP) . In UE, one or a plurality of BWPs may be configured within one carrier.

At least one of the configured BWPs may be active, and it may not assumed that the UE transmits and receives a predetermined signal/channel out of the active BWP. Note that, the "cell", the "carrier", and the like in this disclosure may be replaced with "BWP".

The structure of the radio frame, the subframe, the slot, the mini slot, the symbol, and the like, described above, is merely an example. For example, the configuration of the number of subframes included in the radio frame, the number of slots per a subframe or a radio frame, the number of mini slots included in the slot, the number of symbols and RBs included in the slot or a mini slot, the number of subcarriers included in RB, the number of symbols in TTI, a symbol length, a cyclic prefix (CP) length, and the like can be variously changed.

In this disclosure, for example, in a case where articles such as a, an, and the are added by translation, this disclosure may include a case where nouns following the articles are in the plural.

In this disclosure, the term "A and B are different" may indicate "A and B are different from each other". Note that, the term may indicate "A and B are respectively different from C". The terms "separated", "coupled", and the like may be interpreted as with "being different".

Each aspect/embodiment described in this disclosure may be independently used, may be used by being combined, or may be used by being switched in accordance with execution. In addition, the notification of predetermined information (for example, the notification of "being X") is not limited to being performed explicitly, and may be performed implicitly (for example, the notification of the predetermined information is not performed).

As described above, this disclosure has been described in detail, but it is obvious for a person skilled in the art that this disclosure is not limited to the embodiment described in this disclosure. This disclosure can be implemented as corrected and changed modes without departing from the spirit and scope of this disclosure defined by the description of the claims. Therefore, the description in this disclosure is for illustrative purposes and does not have any limiting meaning with respect to this disclosure.

### EXPLANATIONS OF LETTERS OR NUMERALS

- 10: BASE STATION APPARATUS
- 110: TRANSMITTING UNIT
- 120: RECEIVING UNIT
- 130: CONFIGURATION UNIT
- 140: CONTROL UNIT
- 20: USER TERMINAL
- 210: TRANSMITTING UNIT
- 220: RECEIVING UNIT
- 230: CONFIGURATION UNIT
- 240: CONTROL UNIT
- 1001: PROCESSOR
- 1002: STORAGE UNIT
- 1003: AUXILIARY STORAGE UNIT
- 1004: COMMUNICATION UNIT
- 1005: INPUT UNIT
- 1006: OUTPUT UNIT

## Claims

1. A terminal comprising:
a reception unit configured to receive feedback information for uplink transmission based on a configured grant from a base station apparatus;
a control unit configured to determine an application target of a transmission power control command included in the feedback information; and
a transmission unit configured to apply the transmission power control command to uplink transmission of the application target.

2. The terminal as claimed in claim 1,
wherein the control unit is configured to determine, as the application target, uplink transmission scheduled by a dynamic uplink transmission grant, retransmission for uplink transmission for which NACK is indicated as HARQ-ACK information in the feedback information, or uplink transmission based on a configured grant.

3. The terminal as claimed in claim 1 or 2,
wherein, when the terminal has a plurality of active configured grants, the control unit is configured to select one or more configured grants as the application target from the plurality of active configured grants based on an index of a configured grant, a priority of a configured grant, or HARQ-ACK information in the feedback information.

4. The terminal as claimed in claim 1 or 2,
wherein, when the terminal has a plurality of active configured grants, the control unit is configured to select a configured grant designated by the feedback information as the application target from the plurality of active configured grants.

5. The terminal as claimed in any one of claims 1-4,
wherein, when the terminal is configured by the base station apparatus to perform power control of uplink transmission in a plurality of loops, the control unit is configured to determine a loop to which a transmission power control command included in the feedback information is applied based on configuration information received from the base station apparatus.

6. A transmission power control method executed by a terminal, the method comprising:
a step of receiving feedback information for uplink transmission based on a configured grant from a base station apparatus;
a step of determining an application target of a transmission power control command included in the feedback information; and
a step of applying the transmission power control command to uplink transmission of the application target.
